# EUROPEAN PATENT APPLICATION

(11) **EP 4 752 809 A1**
(43) Date of publication of application: **03.06.2026**
(21) Application number: 24216515.7
(22) Date of filing: 29.11.2024
(51) Int. Cl.: G06Q 20/36, G06Q 20/38, G06Q 20/40

(54) **DIGITAL CURRENCY WALLET AND DIGITAL CURRENCY SYSTEM**

(71) Applicant: Giesecke+Devrient advance52 GmbH, 81677 München (DE)
(72) Inventor: HERBORG, Raoul-Thomas, 81677 München (DE); ZELLER, Peter, 81677 München (DE); ELKADOUSI, Mohamed Ahmed Ali Mahmoud, 81677 München (DE); BOHN, Markus, 81677 München (DE)
(74) Representative: Giesecke+Devrient IP

(57) **Abstract**

According to the present solution a digital currency wallet (10), comprises
- a storage unit (12) comprising digital currency (15) and a digital currency wallet mode (24); and
- a transaction unit (11) is configured to check the stored digital currency wallet mode (24) before using the digital currency in a digital currency exchange (100, 300, 400);
the digital currency wallet (10) supporting a first digital currency wallet mode, the first digital currency wallet mode being a normal digital currency wallet mode, and a second digital currency wallet mode;
the transaction unit (11) - when using the digital currency (15) in a digital currency exchange (100) in the normal digital currency wallet mode - is configured to create and/or receive exchange data (16) and to store the exchange data (16) in the storage unit (12);
**characterized in that**
the second digital currency wallet mode is a crisis digital currency wallet mode;
the digital currency wallet (10) is configured to switch from the normal digital currency wallet mode to the crisis digital currency wallet mode; and
the transaction unit (11) - when using the digital currency (15) or crisis digital currency (25) in an offline digital currency exchange (300) in the crisis digital currency wallet mode - is configured for reduced exchange data storage in order to increase a number of possible offline digital currency exchanges (300) in the crisis digital currency wallet mode.

## Description

The invention relates to a digital currency wallet configured to store and exchange digital currency and relates to a corresponding digital currency system comprising multiple digital currency wallets.

Digital money systems have been discussed for quite some time. Many of the recent account-based systems use blockchains, wherein ownership of the digital money is transferred within the blockchain, e.g. by changing the assignment from one account to another account. Within the field of digital money systems now also the implementation of digital currency systems is discussed. Digital currencies are issued by central banks (or similar national or regional authorities) and typically supplement fiat or paper money issued by the central banks.

In token-based digital money systems digital money tokens are stored in secure wallets and are transferred between the secure wallets. For example EP 3 671 514 B1, WO 2020/212331 A1, EP 4 111 347 B1, WO 2023/011758 A1 and WO 2023/011761 A1 disclose different aspects of such systems. Secure wallets typically are local wallets, e.g. smartcards, NFC tags or wallets in a user device.

In EP 4 111 348 B1 digital currency tokens are directly exchanged between digital currency wallets of the digital currency system. Pseudonymity and/or anonymity, in particular for the monetary value of token with respect to the central authorities, may be controlled by selecting one out of multiple available masking modes. The mode may be selected based on a user selection, a system parameter or a property of the device including the wallet. EP 4 111 348 B1 discloses the preamble of claim 1.

According to an object of the invention a digital currency wallet shall be provided which improves the usability of the digital currency wallet, particularly dynamically and/ or for rare events, wherein preferably security is ensured and/or flexibility is achieved.

The above-identified objectives are solved by the subject matter of the independent claims. Further advantageous embodiments are described in the dependent claims.

According to an aspect of the present invention, there is provided a digital currency wallet, comprising
- a storage unit comprising digital currency and a digital currency wallet mode; and
- a transaction unit is configured to check the stored digital currency wallet mode before using the digital currency in a digital currency exchange;
   the digital currency wallet supporting a first digital currency wallet mode, the first digital currency wallet mode being a normal digital currency wallet mode, and a second digital currency wallet mode;
   the transaction unit - when using the digital currency in a digital currency exchange in the normal digital currency wallet mode - is configured to create and/or receive exchange data and to store the exchange data in the storage unit.

The second digital currency wallet mode is a crisis digital currency wallet mode. The digital currency wallet is configured to switch from the normal digital currency wallet mode to the crisis digital currency wallet mode. The transaction unit - when using the digital currency or crisis digital currency in an offline digital currency exchange in the crisis digital currency wallet mode - is configured for reduced exchange data storage in order to increase a number of possible offline digital currency exchanges in the crisis digital currency wallet mode.

Since the digital currency wallet supports a dedicated crisis mode for a crisis situation, its usability is increased. The usability is also reflected by the number of possible offline digital currency exchanges. For the crisis situation offline digital currency exchanges form a highly reliable and/or most likely available exchange option. Hence, the combination of switching in the crisis digital currency wallet mode and a reduced exchange data storage for offline digital currency exchanges in this mode forms a significant improvement.

The number of possible offline digital currency exchanges in the crisis digital currency wallet mode can be increased from m to n, wherein n > m, including n=infinite, by the reduced exchange data storage. Preferably, the number is increased at least by a factor of 2 (n >= 2*m), more preferably at least by a factor of 4 (n >= 4*m). m offline digital currency exchanges would be possible in the crisis digital currency wallet mode upon normal exchange data storage. Typically m offline digital currency exchanges would be possible in the normal digital currency wallet mode upon (normal) exchange data storage. Digital currency wallets in many cases only comprise limited storage capacity.

Preferably, in an offline digital currency exchange the exchange data are created or received and stored in the storage unit for being sent to a (central) system unit of a digital currency system. The (central) system unit preferably being a token (reference) register of the digital currency system or a exchange log register digital currency system.

Reduced exchange data storage is particularly achieved by one or more of the following preferred approaches.

The transaction unit may be configured for reduced exchange data storage by not creating exchange data and/or by not storing created or received exchange data in the storage unit and/or by not sending created exchange data to the other digital currency wallet of the exchange.

The transaction unit may be configured for reduced exchange data storage by creating or receiving crisis exchange data and storing the crisis exchange data. Crisis exchange data are smaller in size than (normal) exchange data. The crisis exchange data include a reduced number of exchange data elements and/or exchange data elements of reduced size.

The transaction unit may be configured for reduced exchange data storage by deleting previously stored exchange data when storing the created or received exchange data.

The transaction unit may be configured for reduced exchange data storage by selectively storing or not storing exchange data based on a filter parameter of the offline digital currency exchange. The filter parameter preferably comprises a digital currency value of the offline digital currency exchange and/or a digital currency wallet type of the other digital currency wallet of the offline digital currency exchange.

The transaction unit may be configured for reduced exchange data storage by storing the exchange data in only one of the two digital currency wallets of the offline digital currency exchange, the digital currency wallet and another digital currency wallet.

The storage unit typically includes one or more limits for offline digital currency exchanges, preferably a maximum digital currency value limit and/ or a maximum number of consecutive offline digital currency exchanges, wherein the limit is increased or deactivated in the crisis digital currency mode. A maximum digital currency value limit limits the digital currency value in the digital currency exchange. A maximum number of consecutive offline digital currency exchanges limits the number of offline digital currency exchanges without sending exchange data to the central system unit of the digital currency system.

In or after a crisis situation, like an earthquake, a tornado, a severe flooding or a war-like crisis, the digital currency wallet is switched into the crisis mode. The crisis preferably is a natural crisis or a natural disaster. The crisis situation is an unpredictable crisis situation, in particular unpredictable in regard to its effects and/ or its occurrence. For the sake of clarity, pure technical issues do not cause a crisis situation. In the crisis situation local, regional and/or national communication infrastructure may be partly or fully inactive for multiple days or weeks. The crisis situation extends over multiple days or weeks, preferably at least 3 days, more preferably at least one (two) week(s). After the end of the crisis situation a back switching from the crisis mode to the normal mode may be performed.

In the preferred variants, the digital currency wallet is adapted to switch if crisis switching data are received, the crisis switching data being public crisis switching data, and the public crisis switching data will be published and/or distributed in a crisis situation.

The public crisis switching data will preferably be published and/ or distributed only, if the crisis situation will still extend over multiple days or weeks, preferably at least 3 days, more preferably at least one or two weeks.

In the crisis digital currency wallet mode the transaction unit may be configured to create new crisis digital currency tokens including a crisis mode indicator, preferably a unique crisis identifier, wherein the crisis mode indicator is particularly included in a token reference of the created new crisis digital currency token. Crisis digital currency token may have a different format, e.g. different TLV structure or different length for a token data element. The crisis mode indicator may be part of the formatting information of the crisis digital currency token, e.g. a tag or a length of a token data element may form the crisis mode indicator, or be included in the digital currency token data element, e.g. in the token reference or the token value.

The exchange data preferably are (or comprise) token exchange data, more preferably token registration data for registration - in a token register - of one or more new digital currency token created in the digital currency token exchange based on one or more old digital currency token.

Token exchange data particularly comprise: one or more token reference(s) of the respective one or more old digital currency token(s), one or more digital currency value(s) of the respective one or more old digital currency token(s), one ore more token reference(s) of the respective one or more new digital currency token(s), one or more digital currency value(s) of the new digital currency token(s), and one ore more signatures of the old digital currency token(s), the signature(s) preferably created by a token individual secret of the token old digital currency token(s). Based on k old digital currency tokens 1 new digital currency tokens may be created (k=1: switch token, or k>l merge tokens or k<l: split token).

Crisis token exchange data may particularly comprise: crisis token reference(s) of the new digital currency token(s), digital currency value(s) of the new digital currency token(s), and one ore more crisis signatures of the old digital currency token(s). The size of crisis token exchange data and/or crisis token reference and/or crisis signature is below the size of the corresponding normal data (token exchange data, token reference, signature).

The exchange data are (or comprise) exchange log data for logging the digital currency exchange in an exchange log register, the exchange log data preferably comprising at least one or both digital currency wallet identifiers and a digital currency value of the digital currency exchange.

A digital currency system typically comprises one or more digital currency wallets, preferably as described above; and one or more of the following a digital currency token register, preferably a digital currency token reference register; and/ or a digital currency exchange log register; and/or a crisis token management unit; and/or a digital currency token issuing unit.

The digital currency wallet may be configured to switch from the normal digital currency wallet mode to the crisis digital currency wallet mode, if crisis switching data are received. The crisis switching data being public crisis switching data. The public crisis switching data will be published and/or distributed in a crisis situation.

Since the digital currency wallet supports a dedicated crisis mode for a crisis situation, its usability is increased. By switching to the crisis mode, if crisis switching data are received, a stable and selective process is provided. Since the switching data are public switching data, the switching of the digital currency wallet becomes more likely / reliable and/or the switching data may be distributed flexibly, e.g. via different distribution channels. For the sake of clarity, public data can be made available to the public (publicly available data), since their publication does not affect the security (of the system or the wallet). This is particularly a contrast to secret data, which should be securely held/hidden from the public. Furthermore, inter alia by publishing and/or distributing the crisis switching data in the crisis situation, erroneous or malicious switching can be avoided.

In the step of switching the (current) digital currency wallet mode stored in the storage unit is set to crisis digital currency wallet mode. Hence, the current mode stored in the storage unit is changed from normal mode to crisis mode. For the sake of brevity the modes of the digital currency wallet are also referred to as normal mode and/or crisis mode herein.

The storage unit of the digital currency wallet may comprise switching verification data. The switching verification data are intended for a verification of the received public crisis switching data. The digital currency wallet mode is switched, if the received public crisis switching data are verified (based on the stored switching verification data) and/ or not switched if the received public crisis switching data are not verified (based on the stored switching verification data).

In the verification of the received public crisis switching data one or more verifications steps may be performed. Different steps will be described in more detail below. The digital currency wallet, optionally the transaction unit, is configured to perform the step(s) of the verification.

Preferably, the switching verification data comprise comparison reference data. The public crisis switching data, a data element thereof or data derived from at least parts of the public crisis switching data must match the comparison reference data.

In an example, the public crisis switching data or a data element thereof may be a number, password or passphrase, preferably longer than 24 bytes, which must match the respective stored comparison reference data.

In a preferred example, the comparison reference data are derived comparison reference data. Based on derived comparison reference data the matching public crisis switching data (element) can not be constructed. Derivation of the public crisis switching data (element) however results in the derived comparison reference data. The derivation function used preferably is a public one-way function, like a hash function or a public key encryption.

Preferably, different distribution channels and/or one or more decentral distribution channels may be used.

The distribution of the public crisis switching data can be improved, if they are distributed between digital currency wallets of the digital currency system. The public crisis switching data can be received in the digital currency wallet from another digital currency wallet of the digital currency system. The digital currency wallet may store the received public crisis switching data and provide them to another digital currency wallet. Preferably, the switching data are received in preparation of a digital currency exchange. The digital currency exchange may than be performed in the crisis mode. The digital currency wallets of the system will interact with each other, primarily in digital currency exchanges, and thus may distribute the public crisis switching data automatically and/or faster than a selective or even manually triggered process.

In addition or alternatively one or more crisis distribution channels may be used (in parallel). A crisis distribution channel is a channel which is only used for the digital currency system in a crisis situation, and thus not used in the normal mode. Examples for crisis distribution channels are radio, printed media or mobile communication broadcast. The public crisis switching data will be preferably distributed in a machine-readable form, e.g. as a barcode or QR code or text (for OCR recognition) or in a NFC tag. The public crisis switching data could be scanned in by a user device, like a smartphone, camera or smart wearable, and sent from the user device to the digital currency wallet.

The storage unit - at least in the crisis digital currency wallet mode, preferably in both modes - may comprise a mode counter. The stored mode counter may be referred to as the current mode counter. The mode counter preferably enables a verification, if a received mode counter is increased versus the current mode counter of the digital currency wallet. A mode counter is an increasing data element, which could be a simple counter, a version number, a time stamp or even a name within an increasing naming system (alpha, bravo, charlie ...). A mode counter could be e.g. increased with each crisis or increased upon switching between the modes (normal to crisis and/or crisis to normal). A (crisis) mode counter preferably enables the digital currency wallet to
- distinguish a normal digital currency wallet mode before a first crisis situation from a normal digital currency wallet mode after a first crisis situation; and/or
- distinguish a crisis digital currency wallet mode in a first crisis situation from a crisis digital currency wallet mode in a second crisis situation.

Preferably, the switching verification data comprises the stored (current) mode counter. It may be verified in a verification step that the received mode counter is an increase over the current mode counter of the digital currency wallet. Preferably, the stored (current) mode counter is (further) increased after the end of the crisis, e.g. when switching back to normal mode. It thus can be avoided that old public crisis switching data can be used after the end of a crisis.

In variants the storage unit - at least in the crisis digital currency wallet mode - comprises a crisis identifier. In the normal mode the crisis identifier may be ignored (may contain the old crisis identifier) or may be deleted. Preferably, the switching verification data comprise the (previous) crisis identifier or an empty crisis identifier (field). The crisis identifier uniquely identifies a crisis situation. Hence, it could be e.g. a crisis number or a crisis name. Different crisis situations will have assigned different crisis identifiers. The crisis identifier may form or supplement the mode counter.

In particularly advantageous variants, the storage unit comprises a timestamp received in the normal digital currency wallet mode, preferably received from a central exchange data recipient, such as a token (reference) register or an exchange log register, of the digital currency system. The timestamp thus would be automatically updated in the normal mode and may be used for verification of a received timestamp, received in the public crisis switching data.

The public crisis switching data may comprise one or more of the following data elements: a comparison data element and/or a timestamp data element and/or a mode counter data element and/or a crisis identifier data element and/or a system signature of the digital currency system, preferably an issuer signature from the digital currency issuer, from a token (reference) register or an exchange log register. Preferably, the public crisis switching data comprise a comparison data element as well as a timestamp or mode counter data element. Optionally only, a system signature may be included.

The public crisis switching data are preferably valid system-wide for at least one wallet type in the digital currency system. Their use is thus neither limited to e.g. a single or to some selected digital currency wallets only. The public crisis switching data may be usable for all digital currency wallets of a first wallet type, such as local wallets or user wallets or local user wallets. Digital currency wallets of a second wallet type, such as merchant wallets or local merchant wallets, may require different second public crisis switching data for switching in the crisis digital currency mode. They may for example store corresponding second (derived) comparison reference data different from the public crisis switching data of the first wallet type. Digital currency wallets of a third wallet type, particularly including hosted wallets or hosted user wallet or hosted merchant wallets, are not be switchable to the crisis mode at all.

As already indicated above, the digital currency wallet is configured to switch after a verification of the received crisis switching data, particularly to witch (only) if the verification confirms
- identity of the received crisis switching data or its data element and stored switching verification data or its data element, or
- identity of derived data, derived from the crisis switching data or its data element, and stored switching verification data or its data element;
and/or
- that a received mode counter of the crisis switching data is an increase of a stored mode counter; or
- that a time of a received crisis timestamp of the crisis switching data is an increase of the time of a stored timestamp.

In evolved variants the storage unit may comprises two or more switching verification data records, particularly for two or more crisis situations. Hence, the wallet would support switching into the crisis mode two or more times respectively. Even a second (or further) crisis situation thus can be handled (starting from the normal mode after the end of the first crisis). The two or more switching verification data records alternatively may be assigned to two or more different sub-modes in the crisis mode.

In case the digital currency wallet is in the crisis mode, it should be configured to switch back from the crisis digital currency wallet mode to the normal digital currency wallet mode. The digital currency wallet may particularly switch back, if a received mode counter (or timestamp) is increased compared to a current mode counter (or timestamp) stored in the digital currency wallet. This approach allows the back-switching to be triggered in digital currency exchanges. Alternatively and/or in addition the digital currency wallet is configured to switch back, if a back switching request is received. The back switching request may be received from a central digital currency system unit or from another digital currency wallet. The back switching request may include public crisis back switching data, wherein the public crisis back switching data can have properties described above for public crisis switching data. Hence, they may particularly include a mode counter and/or a comparison data element and/or a timestamp and/or a signature. Preferably, the central digital currency system unit is a crisis token management unit or a digital currency wallet management unit. Public crisis back switching data typically we be published and/ or distributed one or multiple weeks after publication of the public crisis switching data.

The transaction unit may be configured - in the crisis digital currency wallet mode- to create new crisis digital currency tokens including a crisis mode indicator, preferably a unique crisis identifier, wherein the crisis mode indicator is particularly included in a token reference of the created new crisis digital currency token.

The exchange data preferably are created and/or received and stored in the storage unit - at least in the normal mode - for sending the exchange data to a central system unit of the digital currency system (later). The central system unit preferably is a token (reference) register or a log exchange register of the digital currency system.

The exchange data preferably are token exchange data, more preferably token (reference) registration data for registration of a new digital currency token created in the digital currency token exchange in a token register. In particular the token reference of the new digital currency token is registered (token reference registration). The token exchange/ (reference) registration data - created in the normal mode - particularly comprising a digital currency value and a token reference of the new digital currency token(s) as well as a signature of the stored digital currency token(s) used in the digital currency token exchange.

The exchange data may be (or include) exchange log data for logging the digital currency exchange, preferably in an exchange log register. The exchange log data - created in the normal mode - preferably comprise at least one or both digital currency wallet identifiers and a digital currency value of the digital currency exchange. Exchange log data may additionally include further data elements such as a time, a reference text or a type of payment.

The exchange data - in the normal mode - is stored in the storage unit for sending it to the central system unit later, e.g. hours or days later, particularly if an online connection is available or the online connection to the central system unit is established.

The digital currency wallet preferably is a local digital currency wallet. A local digital currency wallet enables (offline/local) digital currency exchanges with another local digital currency wallet, in particular regardless of availability or use of a network (connection). The (local) digital currency wallet could a secure element (or in a secure element), preferably a portable secure element, - such as a smart card, a secure SD card, a SIM card, a secure USB unit or a RFID (or NFC) unit - or an embedded secure element - such as an embedded SIM module, a TPM module, a NFC module or an IoT security module - or an integrated secure element - such as an iSIM unit, iTPM unit or even TEE (trusted execution environment). The local secure element may comprise the (local) digital currency wallet and optionally one or more further security applications. A (user) local device of the user - such as a smart phone, wearable, computer or IoT device - may comprise the (local) digital currency wallet, preferably in an embedded or integrated secure element of the device or alternatively as a secured application of the device.

Digital currency tokens of a digital currency token system preferably comprise one or more of the following token data elements: a digital currency token value (the monetary value in the system), a token individual token secret, e.g. a secret key of a key pair, and/or a token individual token reference, preferably the public key of the key pair. EP 3 671 514 B1, WO 2020/212331 A1, WO 2021/170646 A1, WO 2023/011758 A1 and WO 2023/011761 A1 describe possible aspects of digital currency token transaction systems, digital currency tokens, the transactions and system units in the digital currency system.

The storage unit may also comprise one or more of the following wallet data elements: a wallet identifier, a wallet authentication key and/or a wallet certificate, preferably for the wallet identifier and/or the wallet authentication key. The storage unit shall be a non-volatile storage unit (i.e. not volatile, like RAM) and/or permanently stores its data (not only temporary stores the data).

According to an aspect of the invention, a digital currency system comprises one or more digital currency wallets as described above; and one or more of the following: a digital currency token register; preferably a digital currency token reference register; and/or a digital currency exchange log register; and/or a crisis token management unit; and/ or a digital currency token issuing unit.

The digital currency token register and/or the digital currency exchange log register are receive the respective stored exchange data (token registration data or exchange log data). The crisis token management unit is configured to enable the digital currency wallet to replace crisis digital currency token with (normal) digital currency tokens of the digital currency system, e.g. by exchanging crisis digital currency token(s) versus digital currency token(s) or by checking and forwarding a replacement request generated in the digital currency wallet.

In the following, the invention or further embodiments and advantages of the invention are explained in more detail based on drawings, wherein the drawings describe only some of the possible embodiments of the invention. At least elements drawn with dashed lines are considered to form optional elements.

The drawings are not to be regarded as true to scale, and individual elements of the drawings may be shown in exaggeratedly large or exaggeratedly simplified form.

In more detail, the figures illustrate:
Fig. 1 a known digital currency token wallet in a digital currency token system;
Fig. 2 an embodiment of a digital currency wallet exchanging digital currency in a normal or a crisis digital currency mode;
Fig. 3 a process of switching into a crisis digital currency mode upon receipt of crisis mode switching data and an optional digital currency exchange;
Fig. 4 a process of switching back from a crisis digital currency mode to a normal digital currency mode and an optional digital currency exchange;
Fig. 5 a post-crisis resynchronization process including a token registration phase and a crisis token replacement phase;
Fig. 6 examples of data elements of crisis switching data; and
Fig. 7 examples of data elements of normal token registration data and optional crisis token registration data.

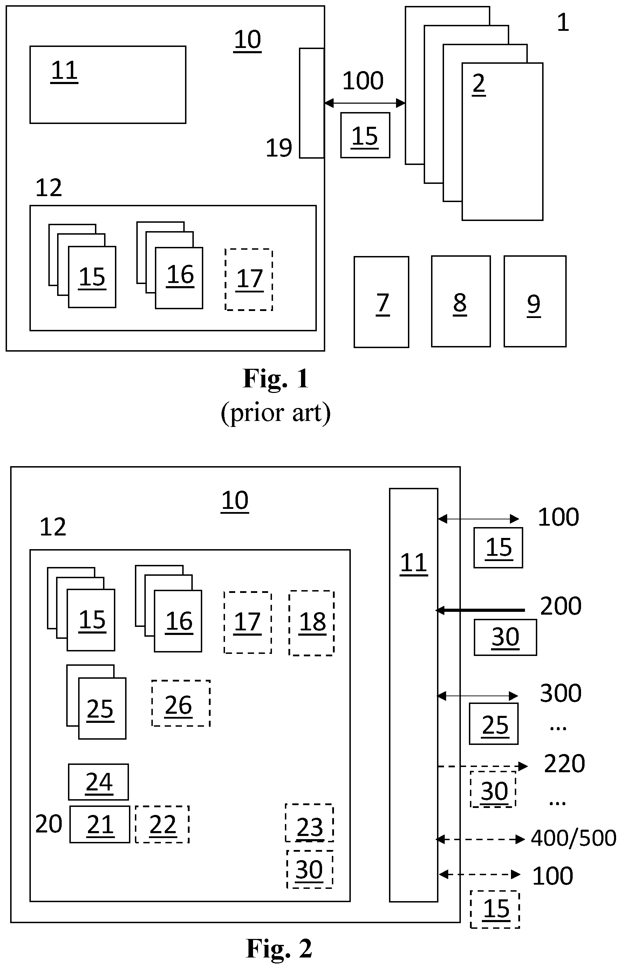

The digital currency system 1 shown in Fig. 1 comprises multiple digital currency wallets 10, 2, a token issuer unit 7, an optional exchange log register 8 and a token reference register 9.

The digital currency system 1 is a digital currency token system, in which the digital currency token wallets 2, 10 are adapted to store digital currency tokens 15 in their storage unit 12. The digital currency wallets 2, 10 include a transaction unit 12 configured to exchange (send or receive) digital currency tokens 15.

Fig. 1 shows a digital currency exchange 100, in which a digital currency token 15 is directly exchanged between the digital currency wallet 10 and the other digital currency wallet 2.

The digital currency wallets 10, 2 comprise an interface unit 19 for the direct exchange of the digital currency. The digital currency exchange 100 is an direct/offline exchange between the wallets. Accordingly, the interface unit 19 typically is a local communication interface unit, such as a NFC or RFID interface unit, a BLE unit or a QR code unit.

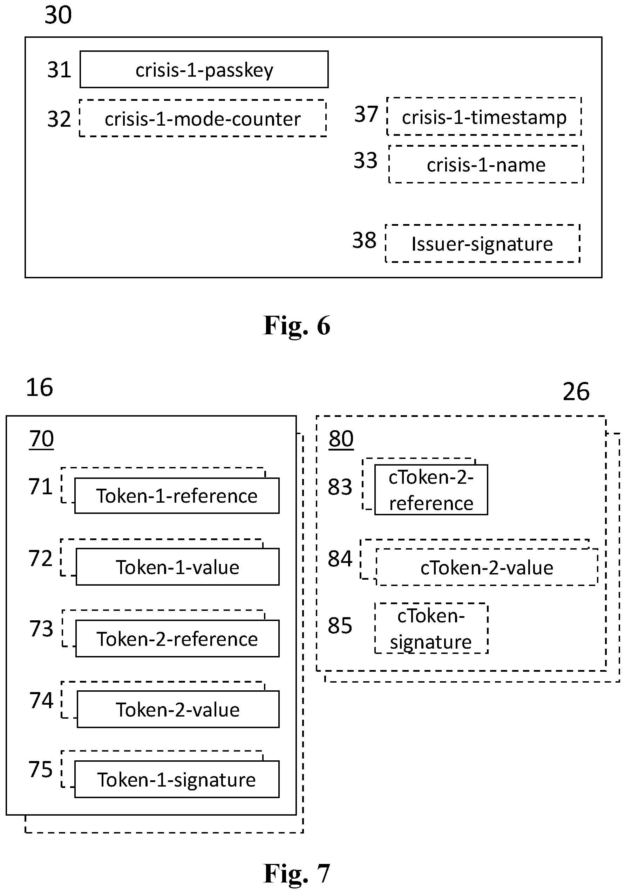

In addition to the digital currency tokens 15, the storage unit 12 comprises (token) exchange data 16. The exchange data 16 are stored for being sent to a central system unit, i.e. the exchange log register 8 or the token reference register 9. In case the exchange data 16 are token reference registration data, the exchange data 16 are sent to the token reference register 9. An example of typical token reference registration data will be described in more detail below with reference to Fig. 7. In case the exchange data 16 are exchange log data, the exchange data 16 are sent to exchange log register 8. Exchange log data typically comprise the identifiers of both digital currency wallets of the digital currency exchange and the digital currency value of the digital currency exchanged, e.g. the sum of all digital currency token values of the sent/received digital currency tokens. Exchange data 16 for one or both registers 8, 9 may be stored in the storage unit 12, preferably however only token reference registration data are (created or received) and stored.

The exchange data 16 are either created in the digital currency wallet 10 and stored in the storage unit 12 or may - in case of receiving a digital currency token 15 - be received from the other digital currency token wallet 2. In preferred embodiments, both the exchange data 16 and the currency token 15, would be exchanged (sent or received) in the digital currency exchange 100.

Fig. 1 further shows an optional data element stored in the storage unit 12, a timestamp 17 may be stored. The timestamp 17 was created by a central system unit, preferably upon receipt of exchange data 16. It thus could be an exchange data reception timestamp. Particularly the timestamp could be created by the token issuer unit 7, e.g. together with a token issued, by the exchange log register 8, e.g. upon receipt of exchange log data from the digital currency wallet 10, by the token reference register 9, e.g. upon receipt of token reference registration data from the digital currency wallet 10. The timestamp 17 thus constitutes an automatically updated reference data element/current timestamp in the digital currency wallet 10.

Fig. 2 shows details of a digital currency wallet 10: The digital currency wallet 10 comprises a storage unit 12 and a transaction unit 11. Further units such as an interface unit 19 and /or a processor unit may exist but are not illustrated. In the variant shown in Fig. 2, the digital currency wallet 10 is a digital currency token wallet and may form an improvement of the wallet of Fig. 1.

The storage unit comprises digital currency (token) 15 and a digital currency wallet mode 24. The transaction unit is configured to check the stored digital currency wallet mode 24 before using the digital currency 15 in a digital currency exchange 100, 300, 400. The digital currency wallet 10 supports a first digital currency wallet mode, the first digital currency wallet mode being a normal digital currency wallet mode, and a second digital currency wallet mode. The transaction unit - when using the digital currency 15 in a digital currency exchange 100 in the normal digital currency wallet mode - is configured to create and/or receive exchange data 16 and to store the exchange data 16 in the storage unit 12.

The second digital currency wallet mode is a crisis digital currency wallet mode. The digital currency wallet 10 thus may exchange digital currency also in a crisis mode. The digital currency wallet 10 is configured to switch from the normal digital currency wallet mode to the crisis digital currency wallet mode, in particular if crisis switching data 30 are received 200. The crisis switching data 30 are public, i.e. public crisis switching data 30. They will be published and/or distributed in a crisis situation. When switching to the crisis mode, the stored digital currency mode 24 will be changed to reflect the switch from "normal" to "crisis" (e.g. "n" to "c" or "0" to "1" ...).

The digital currency wallet 10, after switching to the crisis digital currency mode, would exchange 300 digital currency 25 in the crisis mode. In the variant shown in Fig. 2 normal digital currency tokens 15 are exchanged (sent or received) in normal digital currency exchanges 100 and crisis digital currency tokens 25 are exchanged (sent or received) in crisis digital currency exchanges 300. In other variants however, normal digital currency (tokens) 15 will be exchanged also in crisis digital currency (token) exchanges 300.

In or after a crisis situation, like an earthquake, a tornado or a severe flooding, crisis switching data 30 are published and distributed. In the digital currency wallet 10 the crisis switching data reception 200 triggers the switching into the crisis mode for the digital currency wallet 10. The public crisis switching data 30 can trigger the mode switching in the multiple digital currency wallets 10, 2 of the digital currency system 1. Accordingly, the public crisis switching data 30 are valid system-wide for a wallet type, e.g. the local wallets 2, 10. The crisis switching data 30 required for the mode switching thus are neither wallet specific nor session specific.

In a back switching process 400, the digital currency wallet 10 may be changed back to the normal digital currency mode again and thus subsequently perform (normal) digital currency exchanges 100 again. In alternatives however, the digital currency wallet 10 may not be able to be switched back.

The received public crisis switching data 30 are verified in the digital currency wallet 10 based on switching verification data 20 stored in the storage unit 12.

The switching verification data 20 preferably comprise comparison reference data 21. The digital currency wallet 10 compares at least a data element of the received public crisis switching data 30, a derivative thereof or the full received public crisis switching data 30 with the comparison reference data 21. The switching verification data 20 may also comprise a current mode counter 22, a current timestamp 17 and/or a current crisis identifier 23.

Examples of possible data elements 31-38 of the public crisis switching data 30 are illustrated in more detail in Fig. 6. The public crisis switching data 30 of Fig. are published and distributed for a first crisis "crisis-1".

The public crisis switching data 30 will typically comprise a comparison data element 31. The comparison data element 31 may for example comprise a passkey "crisis-1-passkey". This passkey was created before personalization/issuance of the digital currency wallet 10, but is published and/or distributed only in the crisis situation.

In a first variant the comparison data 31 will be compared with the comparison reference data 21. If comparison data 31 and comparison reference data 21 are identical (or not), the mode is switched to the digital currency crisis mode(or not), particularly if no further verification steps are defined. In a second variant, the comparison reference data 21 stored in the digital currency wallet 10 are not identical to the comparison data element 31, but selected to be derivable - via a one-way function, such as a hash function or one-way encryption function - from the comparison data element 31. In this variant the comparison data element 31 is protected (by being not even stored in the wallets) from being discovered before publication in the crisis situation.

The comparison data 31 were used for personalization/issuance of the digital currency wallet 10, e.g. by storing it (or a derived value thereof) in the comparison reference data 21. The comparison data element 31 may form the public crisis switching data 30. A length of the comparison data element 31 preferably is above 24 bytes.

The verification step of comparing may optionally be protected by an error counter (limiting the number of unsuccessful comparison attempts), which is preferably set to a number higher than 3 and lower than 20.

The public crisis switching data 30 may comprise a mode counter 32 "crisis-1-mode counter". A current mode counter 22 may be stored in the storage unit 12 of the digital currency wallet 10 for verifying the received mode counter 32. In a verification step of a received mode counter the digital currency wallet 10 checks if the received mode counter 32 is an increase of the current mode counter 22. If the verification is positive (increase) the switching to the crisis mode may occur. In case of switching the received mode counter 32 may be stored as a current mode counter 22. If the received mode counter however is not an increase, the switching will not be performed. Basically, the mode counters ensure that the digital currency wallet 10 does not switch to the crisis mode either again based on the same received public crisis switching data and/or does not switch to the crisis mode based on outdated received public crisis switching data, particularly after the end of the crisis situation.

The mode counters 22, 32 may be represented in a format which allows detection of an increase. Hence, the mode counter could be a number ("5" > "4" ...), it could be a version number ("C.1" > "B.1" ...) or even any other systematically increasing data field. Thus a crisis timestamp 37 may also form a mode counter for the current timestamp 17, which is provided to the digital currency wallet from a digital currency system unit 7, 8, 9 (as indicated above). The existing timestamp 17 may now be reused as a current timestamp in the verification of the received public crisis switching data 30 including a crisis timestamp. An increase of the mode counter 32 is assumed, e.g. - in case of a number - if the value of the received mode counter 32 is higher than the stored current mode counter 21 or if - the given sorting in the mode counter such as an alphabetical order or a date and/or time- indicates an increase. Theoretically even a crisis identifier 33 "crisis-1-name" may be selected in as such a way that an increase is detectable ("Charlie" > "Bravo" in the alphabetical order of crises).

The public crisis switching data 30 may comprise a crisis identifier 33 "crisis-1-name". The stored switching verification data 20 may comprise a corresponding current mode/crisis name 33. A crisis name 33 uniquely identifies a crisis situation. It allows to verify in a verification step of the received public crisis switching data 30, if the stored crisis identifier differs from the received crisis identifier. For example, a crisis name may be "Tornado MidCountries". The received crisis identifier 33 upon switching may be stored in the storage unit as a current crisis identifier 23 (or even in the stored digital currency mode 24, e.g. switch form normal = "0" or empty to crisis = "crisis-1-name").

Finally, the public crisis switching data 30 may also comprise a system unit signature 38, such as an issuer signature 38 (preferably created in the token issuer unit 7) or a token register signature (created in the token register 9). The signature is generated for one or more of the other data element(s) 31,32,33, 37 of the public crisis switching data 30. The system unit signature in a verification step may be verified in the digital currency wallet 10, particularly based on a public key 18 (of the respective system unit 7,8,9) stored in the storage unit 12. Switching would only be performed, if the signature can be verified.

Preferably, the public crisis switching data 30 comprises the comparison data 31 and the mode counter 32 (e.g. in the form of a timestamp) or the system unit signature 38 and the mode counter 32 (e.g. in the form of a timestamp).

Fig. 2 also illustrates that the storage unit 12 - after the switching to the digital currency crisis mode - may comprise crisis digital currency tokens 25 and optionally crisis token exchange data 26.

Crisis digital currency tokens 25 may be created and stored or received in the digital currency crisis mode of the digital currency wallet 10. Crisis digital currency tokens 25 may have a reduced size compared to a size of the normal digital currency tokens 15 in order to reduce a storage consumption in the crisis mode. For example, a value data element of the token and/or a token individual secret data element and/or a token reference data element of the crisis digital currency tokens 25 may have a reduced size.

Fig. 2 also illustrates another aspect, according to which the digital currency wallet 10, comprising a storage unit 12, which stores digital currency 15 and a digital currency wallet mode 24, and comprising a transaction unit configured to check the stored digital currency wallet mode before using the digital currency in a digital currency exchange. The digital currency wallet supports a first (normal) and second (crisis) digital currency wallet mode. When using the digital currency 15 in a digital currency exchange 100 in the normal digital currency wallet mode, the transaction unit is configured to create and/or receive exchange data and to store the exchange data in the storage unit. However, when using the digital currency or crisis digital currency in an offline digital currency exchange 300 in the crisis digital currency wallet mode - the transaction unit 11 is configured for reduced exchange data storage in order to increase a number of possible offline digital currency exchanges in the crisis digital currency wallet mode.

In an exchange in the normal mode the exchange data 16 are created or received and subsequently stored in the digital currency wallet 10. For enabling a higher number of offline (token) exchanges in the crisis mode, the creation and/ or storage of the exchange data 16 is adapted, in particular crisis token exchange data 26 may be stored.

Fig. 7 illustrates an example of exchange data 16, being token registration data to be sent to the token register 9 of the digital currency system 1. The figure further shows an example of crisis exchange data 26, being crisis token exchange data to be sent to the token register 9 of the digital currency system 1.

The token registration data 16 of a digital currency token 15 may comprise one or more registration data records 70. One or more output tokens may have been created in a/the digital currency wallet based on one or more input tokens. Each registration data record 70 - when sent to the token reference register 9 - requests replacement of registration of one or more input token references 71 (registered in the token reference register 9) by registration of one or more output token references 72. The token registration data 16/ the registration data record 70 comprise one or more input token references 71, one or more output token references 72, the currency value(s) 72 of the input token(s), the currency value(s) 74 of the output token(s) and signature(s) 75 of the input token(s). The signature 75 is created by the token individual secret of the respective input token. In particular, one signature 75 per input token is used.

The crisis exchange data 26 of a crisis digital currency token 25 may also comprise multiple registration data records 80. They would have a reduced size compared to the exchange data 16. Some data elements of the normal exchange data 16 may be omitted/not included in the crisis exchange data 26, in particular input token value(s) and/or signature(s). One or more data elements of the crisis exchange data 26, such as output token reference(s) 83 and/or currency value(s) 84 and/or signature(s) 85 may have a reduced size compared to the size of the respective data element in the normal mode. For example, the length of the token individual secret of the crisis digital currency token 25 may have a reduced size (e.g. less than 75% of the number of bytes for normal tokens). Accordingly, the size of the token references and the signatures would be reduced accordingly, for example to less than 75% of the normal size, particularly to 50% of the normal size. Furthermore, instead of one signature 75 per input token, a common signature 85 of all input tokens may also be used.

In addition or alternatively to using exchange data of reduced size, i.e. crisis exchange data 26, there are further alternatives for reducing storage consumption and/or even fully avoiding storage of additional data. In first variants, no exchange data 16,26 would be created and/or received in an exchange in the crisis mode. In second variants, created and/or received exchange data 16, 26 would not be stored. Finally, in third variants, created and/or received exchange data 16, 26 would upon storing in the storage unit 12 replace stored exchange data 16, 26. For example a ring buffer could be used for storing the exchange data 16, 26.

Returning to Fig. 2, now a further aspect shall be discussed. The storage unit 12 may store a copy 30 of received public crisis switching data for their further distribution to other digital currency wallets.

The public crisis switching data will be published and/or distributed in a crisis situation. Publication and/or distribution may occur via system-external channels such as printed media (newspaper), radio, television or cell broadcast messages. For example, a QR code including the public crisis switching data (published on a leaflet or in the local newspaper) may be scanned by a user device (like a smartphone) and sent to the digital currency wallet 10 (in the user device or separate therefrom) in process 200. Due to publication the distribution already is not serial anymore but occurs in parallel for multiple wallets.

A distribution speed of the public crisis switching data 30 in the digital currency system can be significantly improved if the wallets distribute them (as well). Thus the public crisis switching data 30 stored in the storage unit 12 of the digital currency wallet 10 will be sent to other digital currency wallets 2 in a wallet-2-wallet distribution process 220. The wallet-2-wallet distribution process 220 can be preferably integrated into a digital currency exchange. Hence, within each digital currency exchange the stored public crisis switching data 30 would be sent/provided to the other digital currency wallet. An automatic distribution is thus achieved.

Although Fig. 2 has been and the following figures will be described for a token-based local digital currency wallet, an account-based local digital currency wallet may theoretically also be used, which preferably creates and stores exchange log data as exchange data 16 for sending them to an exchange log register 8 of the digital currency system 1.

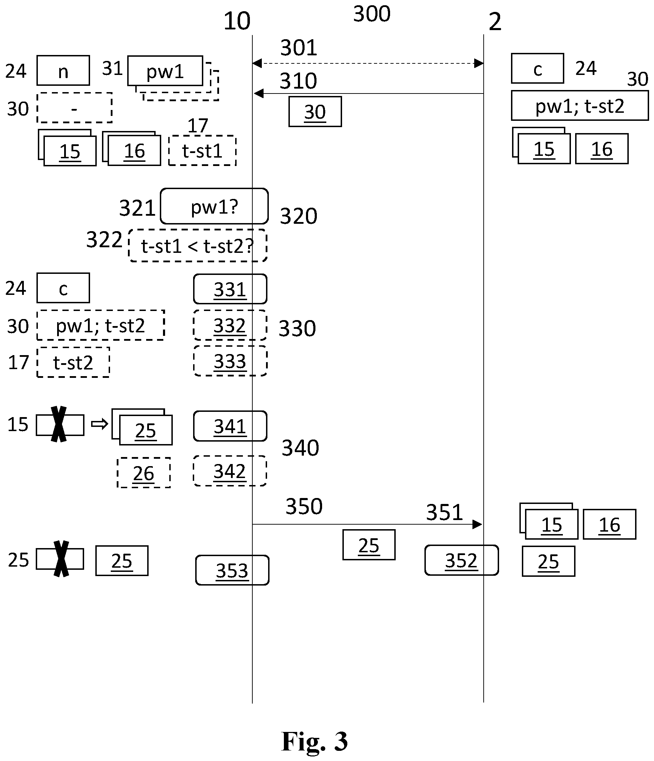

Fig. 3 illustrates steps of an digital currency exchange 300 between a digital currency wallet 10 and another digital currency wallet 2.

The digital currency wallet 10 is in the normal digital currency mode, as indicated by "n" being stored in the digital currency mode 24 of the digital currency wallet 10. The other digital currency wallet 2 already is in the crisis digital currency mode, as indicated by "c" being stored in the digital currency mode 24 of the digital currency wallet 2. The other digital currency wallet 2 stores crisis switching data 30 for provisioning to other digital wallets. In the example illustrated in Fig.3 the crisis switching data comprise comparison data pw1 and a timestamp t-st2. Both digital currency wallets 10,2 may comprise digital currency tokens 15 of the digital currency system 1 and optionally exchange data 16 for one or more of the tokens 15.

In optional step 301 the wallets 2, 10 may perform an authentication, preferably a mutual authentication. Corresponding wallet authentication keys and key certificates (not shown) may be used.

In step 310 the digital currency wallet 10 receives the public cris switching data 30 form the other digital currency wallet 2. A switching data verification 320 in the digital wallet 10 comprises one or more verification steps 321, 322. In the present example, in a first verification step 321 comparison data 31 pw1 are compared with stored comparison reference data 21. The digital currency wallet 10 could optionally store multiple comparison reference data records 21, preferably for multiple crisis situations. If the verification step 321 fails/detects a difference in the compared data, no switching would occur.

In a second verification step 322 the received timestamp t-st2 of the crisis switching data 30 is compared with a stored timestamp 17 t-st1. Timestamp 17 has been received from a system unit 7, 8, 9, in a normal system interaction. In particular digital currency wallet(s) may receive a timestamp from the central system unit, token reference register 9 or exchange log register 8, when sending their exchange data 16 to the central system unit and store this timestamp as a current timestamp 17.

If the received timestamp t-st2 documents an increase in time over the stored timestamp t-st1, a switching to the crisis mode may occur, since the verification result is positive. The timestamps may indicate an increase in days, weeks, months and/ or years. In other cases, particularly when the received timestamp would be older than the current timestamp 17 (or indicate same time), no switching would occur. Thus, for example if digital currency wallet 2 still would be in the crisis mode of a previous crisis (months ago), it could not trigger switching into the crisis mode in an exchange with digital currency wallets having more recent current timestamps.

In the process 300 illustrated in Fig. 3 verification is successful. The digital currency wallet 10 switches 310 from the normal digital currency mode to the crisis digital currency mode. In step 311 the stored current mode 24 is changed to "c", for crisis mode. Furthermore, the received timestamp t-st2 is stored 333 as a new current timestamp 17. Optionally, the received public crisis switching data 30 are stored 332 in the storage unit 12 of the digital currency wallet 10. Since the data 30 are stored for being provided to other wallets, they may also be referred to as (inter-wallet or wallet-2-wallet) provisioning data.

Both wallets 2, 10 are now in the crisis mode and may exchange digital currency tokens 15 or crisis digital currency tokens 25. Fig. 3 for highlighting the changed mode illustrates an example in which crisis digital currency tokens 25 are created 340 and exchanged 350.

In step 341 one or more new crisis digital currency tokens 25 are created based on one or more stored digital currency tokens 15. The input digital currency token(s) 15 of this token creation/token replacement are deleted. Preferably, however the exchange data 16 of the digital currency token 15 used for creating a crisis token 25 is not deleted. In step 342 crisis exchange data 26 may be created for the token replacement. Optionally neither normal exchange data 16 nor crisis exchange data 26 are stored.

In the digital currency token exchange 350 (one of) the created crisis digital currency token 25 is exchanged from digital currency wallet 10 to digital currency wallet 2. In a first step 351 the created crisis digital currency token 25 is sent. The digital currency wallet 10 may mark the sent crisis digital currency token 25 as sent. In step 352 the crisis digital currency token 25 is stored in the digital currency wallet 2. Preferably only after receipt of a confirmation by digital currency wallet 2 ("token received" - not shown), the digital currency wallet 10 deletes the sent (and/or marked) crisis digital currency token 25.

Hence, the crisis mode switching 330 may be performed in a preparation phase 301-330 of a digital currency (token) exchange. Accordingly, the digital currency (token) creation and digital currency (token) exchange phases 340-350 of the digital currency exchange 300 may be already performed in the crisis digital currency mode.

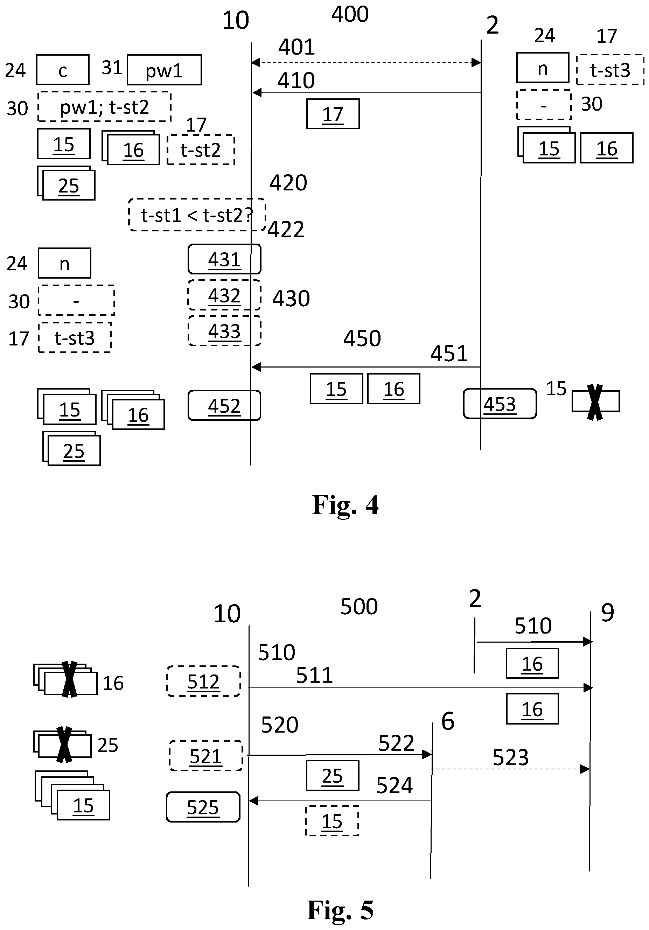

Fig. 4 illustrates steps of another digital currency exchange 400, which includes a back switching process, between a digital currency wallet 10 and another digital currency wallet 2. Wallet 2, 10 could be the wallets of Fig. 3.

As indicated in the respective digital currency mode 24 of the wallets 2,10, the digital currency wallet 10 still is in the crisis mode ("c") and the digital currency wallet 2 is in the normal mode ("n"). The digital currency wallet 10 stores the timestamp t-st2 of the previous crisis. The digital currency wallet 2 stores a more recent timestamp 17 t-st3.

After optional (mutual) authentication 401, the digital currency wallet 10 may receive a back switching request 410. In the example illustrated, the back switching request is formed by the current timestamp 17. In a switching verification 420, the digital currency wallet 10 - for the request formed by the timestamped - checks, if the received timestamp t-st3 is an increase of/more recent than it's current timestamp t-st2.

In a mode switching step 430 the digital currency wallet 10 switches back from the crisis mode to the normal digital currency mode. In step 431 the stored digital currency mode 24 is set to normal again ("n"). In step 432 stored public crisis switching data 30 would be deleted. Finally, in step 433 the stored timestamp 17 is changed to store the received timestamp t-st3.

Now both wallets 2, 10 are back in the normal mode again. They may exchange digital currency (token) 15 in the normal mode. In the exchange phase 450 for example a digital currency token 15 optionally together with the token's token exchange data 16 may be received 451. Digital currency wallet 10 stores the received digital currency token 15 (and token exchange data 16 of this token) in step 452. Digital currency wallet 2 deletes the received digital currency token 15 (and the token exchange data 16 of this token) in step 453, preferably after receipt of a reception confirmation (not shown) from the other wallet 10.

It should be noted that digital currency wallets may alternatively or in addition also receive a back switching request form a central system unit 7, 8, 9. For example it could receive a current timestamp from the central system unit 7, 8, 9, store it and switch back. The back switching thus also could be part of a post-crisis resynchronization 500, which will be explained now with regard to Fig. 5.

Fig. 5 illustrates a post-crisis resynchronization 500 for a digital currency wallet 10. The digital currency wallet stores crisis digital currency token 25 and/or crisis exchange data 26. Optionally it may also store token exchange data 16 to be sent 510 to the token reference register 9.

The sending 510 of token exchange data 16 to the token reference register 9 is performed by digital currency wallets 2, 10 of the digital currency system 1. As indicated already above, new tokens 15 created in a digital currency wallet 2, 10 will thus be registered with their token reference in the token reference register 9. Once the exchange data 16 of a stored token 15 have been successfully sent to the central system unit, here the register token reference register 9, they may be deleted.

After having been in the crisis mode, the digital currency wallet 10 may store and sent 510 exchange data 16 not assigned to a stored token 15. In step 511 the exchange data 16 are sent to the token reference register. Thus at least one digital currency token 15 previously stored in the digital currency wallet is registered in the token reference register 9. The exchange data 16 can be deleted 512 in the digital currency wallet 10.

The digital currency wallet 10 in a token replacement process 520 may replace one or more stored crisis digital currency tokens 25 by one or more digital currency tokens 15. Preferably a post-crisis token management unit 6 of the digital currency system 1 enables the token replacement process 520. The post-crisis token management unit 6 may receive 522 the one or more crisis digital currency token 25, optionally together with crisis exchange data 26, from the digital currency wallet 10. It could optionally send 523 token registration requests to the token register. In step 524 the post-crisis token management unit 6 may send the one or more digital currency tokens 15 replacing the crisis tokens 25 to the digital currency wallet 10. The digital currency wallet deletes 521 the crisis tokens 25 and/ or stores 525 the replacing one or more digital currency token 15. In an alternative variant - not show in Fig. 5 - the digital currency wallet replaces the tokens 15,25 and the post-crisis token management unit 6 checks if this replacement is valid (using post-crisis rules).

In further alternative approaches a digital currency wallet 10 may not be able to be switched back after a crisis mode.

### REFERENCE SIGNS

- 1: digital currency system
- 2: digital currency wallet
- 7: token issuer unit
- 8: exchange log register
- 9: token register
- 10: digital currency wallet
- 11: transaction unit
- 12: storage unit
- 15: digital currency token
- 16: token exchange data
- 17: timestamp
- 19: interface unit
- 100: digital currency token exchange

- 18: issuer public key
- 20: switching verification data
- 21: comparison reference data
- 22: current mode counter
- 23: current crisis identifier
- 24: current mode
- 25: crisis digital currency token
- 26: crisis token exchange data
- 30: public crisis switching data
- 31: comparison data
- 32: mode counter
- 33: crisis identifier
- 37: crisis timestamp
- 38: issuer signature
- 200: crisis switching data reception
- 220: crisis switching data provisioning
- 300: crisis token exchange
- 400: back switching process

- 301, 401: mutual authentication
- 310: crisis switching data reception
- 320, 420: switching data verification
- 321: reference data comparison
- 322, 422: timestamp verification
- 330, 430: mode switching
- 331,431: mode change
- 332: switching data storage
- 333, 433: timestamp storage
- 340: token creation
- 341: crisis token creation
- 342: crisis exchange data creation
- 350, 450: token exchange
- 351, 451: token transmission
- 352, 452: token storage
- 353, 453: token deletion
- 410: back switching data reception
- 432: switching data deletion

- 6: post-crisis token management unit
- 500: post-crisis resynchronization
- 510: token registration
- 511: registration request transmission
- 512: token exchange data deletion
- 520: crisis token replacement
- 521: token generation
- 522: crisis token transmission
- 523: token registration
- 524: token replacement confirmation
- 525: token storage

- 70: token exchange data record
- 71: input token reference
- 72: input token value
- 73: output token reference
- 74: output token value
- 75: input token signature
- 80: crisis token exchange data record
- 83: output crisis token reference
- 84: output crisis token value
- 85: output crisis token signature

## Claims

1. A digital currency wallet (10), comprising
- a storage unit (12) comprising digital currency (15) and a digital currency wallet mode (24); and
- a transaction unit (11) is configured to check the stored digital currency wallet mode (24) before using the digital currency in a digital currency exchange (100, 300, 400);
the digital currency wallet (10) supporting a first digital currency wallet mode, the first digital currency wallet mode being a normal digital currency wallet mode, and a second digital currency wallet mode;
the transaction unit (11) - when using the digital currency (15) in a digital currency exchange (100) in the normal digital currency wallet mode - is configured to create and/or receive exchange data (16) and to store the exchange data (16) in the storage unit (12);
**characterized in that**
the second digital currency wallet mode is a crisis digital currency wallet mode;
the digital currency wallet (10) is configured to switch from the normal digital currency wallet mode to the crisis digital currency wallet mode; and
the transaction unit (11) - when using the digital currency (15) or crisis digital currency (25) in an offline digital currency exchange (300) in the crisis digital currency wallet mode - is configured for reduced exchange data storage in order to increase a number of possible offline digital currency exchanges (300) in the crisis digital currency wallet mode.

2. The digital currency wallet (10) of claim 1, **characterized in that** the exchange data (16, 26) are stored in the storage unit (12) in an offline digital currency exchange (100, 300) for being sent to a system unit (6, 7, 8) of a digital currency system (1).

3. The digital currency wallet (10) of claim 1 or 2, **characterized in that** the transaction unit (11) is configured for reduced exchange data storage by not creating exchange data (16, 26) and/or by not storing created or received exchange data (16, 26) in the storage unit (12) and/or by not sending created exchange data to the other digital currency wallet (2) of the digital currency exchange (100,300).

4. The digital currency wallet (10) of one of the preceding claims, **characterized in that** the transaction unit (11) is configured for reduced exchange data storage by creating or receiving crisis exchange data (26) and storing the crisis exchange data (26), wherein preferably the crisis exchange data (26) include a reduced number of exchange data elements (83-85) and/or exchange data elements (83-85) of reduced size.

5. The digital currency wallet (10) of one of the preceding claims, **characterized in that** the transaction unit (11) is configured for reduced exchange data storage by deleting previously stored exchange data (16,26) or parts thereof when storing the created or received exchange data (16,26).

6. The digital currency wallet (10) of one of the preceding claims, **characterized in that** the transaction unit (11) is configured for reduced exchange data storage by selectively storing or not storing exchange data (16, 26) based on a filter parameter of the offline digital currency exchange (300), wherein the filter parameter preferably comprises a digital currency value of the offline digital currency exchange (300) and/ or a digital currency wallet type of the other digital currency wallet (2) of the offline digital currency exchange (300).

7. The digital currency wallet (10) of one of the preceding claims, **characterized in that** the transaction unit (11) is configured for reduced exchange data storage by storing the exchange data (16,26) in only one of the two digital currency wallets (2,10) of the offline digital currency exchange (300), the digital currency wallet (10) and another digital currency wallet (2).

8. The digital currency wallet (10) of one of the preceding claims, **characterized in that** the storage unit (12) includes one or more limits for offline digital currency exchanges (300), preferably a maximum digital currency value limit and/or a maximum number of consecutive offline digital currency exchanges, wherein the limit is increased or deactivated in the crisis digital currency mode.

9. The digital currency wallet (10) of one of the preceding claims, **characterized in that** the digital currency wallet (10) is adapted to switch if crisis switching data are received, the crisis switching data being public crisis switching data (30), and the public crisis switching data (30) will be published and/or distributed in a crisis situation.

10. The digital currency wallet (10) of one of the preceding claims, **characterized in that** transaction unit (11) in the crisis digital currency wallet mode is configured to create new crisis digital currency tokens (25) including a crisis mode indicator, preferably a unique crisis identifier (23), wherein the crisis mode indicator is particularly included in a token reference of the created new crisis digital currency token (25).

11. The digital currency wallet (10) of one of the preceding claims, **characterized in that** the exchange data (16, 26) are token exchange data, preferably token registration data for registration in a token register (9) of one or more new digital currency token (15, 25) created in the digital currency token exchange (100, 300) based on one or more old digital currency token (15, 25),
wherein normal token exchange data (16) particularly comprise:
- token reference(s) (71) of the old digital currency token(s) (15)
- digital currency value(s) (72) of the old digital currency token(s) (15);
- token reference(s) (73) of the new digital currency token(s) (15)
- digital currency value(s) (74) of the new digital currency token(s) (15); and
- one ore more signatures (75) of the old digital currency token(s) (15); and/or wherein crisis token exchange data (26) particularly comprise:
- crisis token reference(s) (83) of the new digital currency token(s) (15),
- digital currency value(s) (84) of the new digital currency token(s) (15), and
- one ore more crisis signatures (85) of the old digital currency token(s) (15).

12. The digital currency wallet (10) of one of the preceding claims, **characterized in that** the exchange data (16, 26) are exchange log data for logging the digital currency exchange (100, 300) in an exchange log register (8), the exchange log data preferably comprising at least one or both digital currency wallet identifiers and a digital currency value of the digital currency exchange (100, 300).

13. The digital currency wallet (1) of one of the preceding claims, **characterized in that**
digital currency tokens (15) of the digital currency token system (1) comprise one or more of the following token data elements: a digital currency token value, a token individual token secret and/or a token individual token reference; and/or
the storage unit (12) comprises one or more of the following wallet data elements: a wallet identifier, a wallet authentication key and/or a wallet certificate, preferably for the wallet identifier and/ or the wallet authentication key.

14. A digital currency system (1) comprising
- one or more digital currency wallets (10, 2) according to one of claims 1 to 14; and one or more of the following:
- a digital currency token register (9); preferably a digital currency token reference register; and/ or
- a digital currency exchange log register (8); and/or
- a crisis token management unit (6); and/ or
- a digital currency token issuing unit (7).
